# EUROPEAN PATENT SPECIFICATION

(11) **EP 0 702 166 B1**
(45) Date of publication and mention of the grant of the patent: **22.12.1999**
(21) Application number: 94114527.8
(22) Date of filing: 15.09.1994
(51) Int. Cl.: F16F 9/46

(54) **Hydraulic shock absorber**
Hydraulischer Stossdämpfer
Amortisseur de chocs hydraulique

(43) Date of publication of application: 20.03.1996
(73) Proprietor: YAMAHA HATSUDOKI KABUSHIKI KAISHA, Iwata-shi Shizuoka-ken, 438 (JP)
(72) Inventor: Sawai, Seiji, c/o 2500 Shingai, Shizuoka-ken (JP)
(74) Representative: Grünecker, Kinkeldey, Stockmair & Schwanhäusser Anwaltssozietät

(56) References cited:
- EP-A- 0 186 167
- EP-A- 0 291 825
- EP-A- 0 403 447
- EP-A- 0 405 123
- DE-C- 4 033 190
- GB-A- 2 000 883
- US-A- 4 954 799
- PATENT ABSTRACTS OF JAPAN vol. 16 no. 290 (M-1272) [5333] ,26 June 1992 & JP-A-04 078338 (TOKICO LTD) 12 March 1992,
- PATENT ABSTRACTS OF JAPAN vol. 14 no. 33 (M-923) ,22 January 1990 & JP-A-01 269769 (MITSUBISHI ELECTRIC CORP) 27 October 1989,
- PATENT ABSTRACTS OF JAPAN vol. 8 no. 76 (M-288) [1513] ,9 April 1984 & JP-A-58 221033 (KAYABA KOGYO KK) 22 December 1983,

## Description

This invention relates to a hydraulic shock absorber with a variable damping force, comprising a cylinder containing a damping fluid, a piston assembly including a throttled piston partitioning said cylinder into a first and a second cylinder chamber communicating with each other via a communicating passage formed in the throttled piston and a valve means for varying the flow resistance of said communicating passage, said piston assembly being provided with an adjusting device comprising a push rod being axially movable received in a piston rod, for pre-adjusting the flow resistance of said throttled piston, said push rod being adapted for pushing a valve body which is axially slidably received in the piston against the force of a spring and which forms part of said valve means which valve means further comprises a proportional solenoid unit for driving said valve body for adjusting the axial position of said valve body which axial position varies the effective cross-sectional area of the communication passage.

Such a hydraulic shock absorber is known from JP-A-58 221033, which discloses a resonance valve mounted in the middle of ports for connecting upper and lower oil chambers formed in a cylinder by a piston. The resonance valve is retained at a neutral position through non- linear neutral springs mounted on and under a resonance spool, and a spring bearing for the neutral spring is coupled to an axially sliding operation rod piercing a piston rod and so that the resonance frequency of the resonance valve is changed depending upon the stroke position of the operation rod.

A further kind of conventional hydraulic shock absorber has been disclosed in, e.g., Japanese Unexamined Patent Publication Hei4-78338. The hydraulic shock absorber disclosed in this publication has been constructed by slidably fitting a throttled piston in a cylinder filled with oil, and mounting a solenoid driven control valve on the piston rod connected to this piston.

The solenoid driven control valve above comprises a solenoid, a plunger which is moved along the cylinder axis toward the solenoid when the solenoid is energized and is returned in the direction opposite to the solenoid by a return spring when the solenoid is deenergized and a valve body integrally provided on the plunger, so that the communicating passage bored through the piston rod to one side of the piston to the other may be closed/opened by this valve body. Further, the communicating passage above is provided with a throttle having a resistance smaller than that of the piston throttle.

That is,, the damping force oecomes comparatively larger because the communicating passage is closed and all amount of oil flows only through the piston throttle when the solenoid is deenergized, while the damping force becomes smaller than that above because oil flows mainly through the communicating passage when the solenoid is energized and the communicating passage is opened.

The conventional variable damping hydraulic shock absorber is so constructed that a larger and a smaller different damping forces may be obtained as described above.

However, with the conventional variable damping force hydraulic shock absorber described above, the degree of freedom for setting the damping force is small because the conventional shock absorber can change the damping force only from a larger one to a smaller one or vice versa.

To solve such an inconvenience, it is required to adjust the damping force by increasing/decreasing the solenoid current so that the solenoid plunger may be moved stepwise or gradually and the opening area of the communicating passage may be gradually changed. However, there are problems to be solved to constitute the conventional variable damping force shock absorbers as described above so that the damping force is adjustable and to mass-produce them as industrial products.

It is because, when massproducing hydraulic shock absorbers having such a structure, although it is required to control their qualities so that the relation between the magnitude of electric current and the damping force may be uniform for all hydraulic shock absorbers because scatterings are apt to be caused among properties of electronic components such as solenoids or among sizes of component parts, the operations for controlling the qualities of conventional variable damping force shock absorbers constructed as described above are extremely troublesome. That is, to finely adjust the throttle magnitute for each hydraulic shock absorber requires to disassemble the cylinder and exchange the internal component parts with those with which desired damping force properties can be obtained.

It is therefore an objective of the present invention to provide a hydraulic shock absorber which has a larger freedom of damping force setting and makes it possible to finely adjust the damping force with a simple operation.

According to the present invention for a hydraulic shock absorber as indicated above, the afore-mentioned objective is performed in that said adjusting device comprising an adjusting member for pre-adjusting the axial position of said push rod, said adjusting member being operable from outside the cylinder.

Preferred embodiments of the present invention are laid down in the dependent claims.

Hereinafter, the present invention is explained in greater detail by means of a preferred embodiment thereof in conjunction with accompanying drawings, wherein;
Fig. 1 is a side view showing the essential portion of a variable damping force hydraulic shock absorber according to preferred embodiments of this invention, partially broken away;
Fig. 2 is a sectional view showing part of the variable damping force hydraulic shock absorber according to the embodiment of fig. 1 in a larger scale;
Fig. 3 is an exploded perspective view of a push rod;
Fig. 4 is a sectional view taken along the line IV-IV of fig. 1; and
Fig. 5 is a sectional view taken along the line V-V of fig. 2;
Fig. 6 is a sectional view of a valve body according to a second embodiment.

In these drawings, the variable damping force hydraulic shock absorber according to a preferred embodiment is provided with a symbol 1. This hydraulic shock absorber is interposed between the car body side and the car wheel side, and is provided with a cylinder 2 to be connected to the car body side and a piston rod 3 projecting out of the lower end of the cylinder 2 so as to be connected to the car wheel side. Here, the hydraulic shock absorber 1 may be mounted in a sense contrary to that above, i.e., in such a sense that the cylinder 2 is connected to the wheel side and the piston rod 3 is connected to the car body side.

In the cylinder 2 is fitted, for sliding along the cylinder axis, a free piston 6 partitioning the cylinder 2 interior into a high pressure gas chamber 4 and an oil chamber 5. The high pressure chamber 4 is filled with high pressure gas, and the oil chamber 5 is filled with oil as hydraulic shock absorber working fluid. The oil chamber 5 is partitioned into an upper oil chamber 5a and a lower oil chamber 5b by a throttled piston 7 installed on the cylinder side end of the piston rod 3.

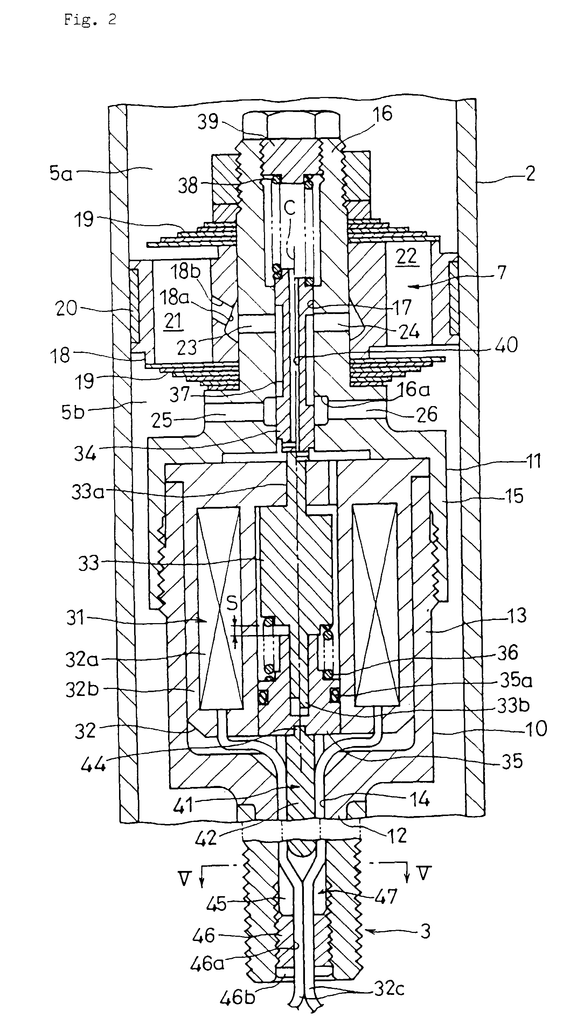

The piston rod 3 is constructed with a hollow shaft 9 penetrating the lower end plug member 8, a solenoid case 10 screwed on the cylinder side end portion of the hollow shaft 9, and a piston supporting shaft 11 screwed on the upper (piston 7 side) end portion of the solenoid case 10. As shown in Fig. 2, the solenoid case 10 is composed of a bolt portion 12 to be screwed in the hollow shaft 9 and a cylinder portion 13 formed integrally with the bolt portion 12. The solenoid case 10 has a through hole 14 bored through the axis portion thereof to connect the inner space of the cylinder portion 13 with the hollow portion of the hollow shaft 9.

The piston supporting shaft 11 is composed of a cylinder portion 15 to be screwed over the outer periphery of the cylinder portion 13 so as to close the opening of the cylinder portion 13 and a shaft portion 16 which is formed integrally with the cylinder portion 15 and on which the piston 7 is to be fixed. Further, the axis portion of the piston supporting shaft 11 has a through hole 17 extended along the cylinder axis direction so as to penetrate the piston supporting shaft 11.

The piston 7 to be mounted on the shaft portion 16 is of a known structure. That is, the piston 7 has a plurality of throttle plates 19 piled on both upper and lower sides of the disk-like piston body 18 and a piston ring installed on the outer periphery of the disk-like piston body 18, and is fitted slidably along the cylinder axis direction in the cylinder 2. The throttle plates 19 are so constructed as to close each one of end opening portions of the oil passages 21 and 22 formed through the disk-like piston body 18 so as to connect the upper and lower end sides of the piston 7 with each other. In this embodiment, the oil passage 21 positioned on the left side in Fig.2 is closed with a throttle plate 19 at the lower end portion, while the other oil passage 22 is closed with a throttle plate 19 at the upper end portion.

With a piston 7 constructed as described above, when the piston rod 3 is moved upward in a state shown in Fig.2, the oil in the oil passage 21 elastically deforms the throttle plates 19 located thereunder and flows into the lower side oil chamber 5b. On the other hand, when the piston rod 3 moves downward, the oil in the oil passage 22 elastically deforms the throttle plates 19 located thereupper and flows into the upper side oil chamber 5a. That is, the throttle plates 19 constitute a resistance against the upward and downward movements of the piston rod 3 so that the vertical movements are damped.

The shaft portion 16 supporting the piston 7 has oil passages 23, 24, 25 and 26 bored radially therethrough for the solenoid driven control valve (to be described later). The oil passages 23 and 24 are formed at positions corresponding to the disk-like piston body 18 with one end communicating with the oil passage 21 through an annular groove 18a and a communicating hole 18b of the disk-like piston body 18 and the other end communicating with the through hole 17. On the other hand, the oil passages 25 and 26 are positioned between the piston 7 and the cylinder portion 15 with one end communicating with the lower oil chamber 5b and the other end communicating with the through hole 17 through an annular groove 16a formed in the shaft portion 16.

That is, the oil passage 21 of the piston 7 communicating with the upper oil chamber 5a communicatedswith the lower oil chamber 5b through the communicating hole 18b, space in the annular groove 18a, oil passages 23 and 24, through hole 17, annular groove 16a and oil passages 25 and 26. The solenoid driven control valve according to this invention is so constructed that the flow rate of the oil flowing into or out of the upper oil chamber 5a and the lower oil chamber 5b may be adjusted and thus the damping force at the piston 7 may be adjusted by increasing or decreasing the cross-sectional area of the oil passage composed in the through hole 17 by a valve body (to be described later). The structure of this solenoid driven control valve will be described below.

A solenoid driven control valve 31 according to this invention is so constructed that th e plunger may be gradually moved by increasing/decreasing the magnitude of the current flowing through the proportional solenoid and the valve body may be driven by this plunger. In Fig.2, the proportional solenoid (hereinafter referred to simply as "solenoid"), plunger and valve body are provided with symbols 32, 33 and 34, respectively, and the view on the left side of the center line C shows the energized state while the view on the right side of the center line C shows the deenergized state.

The solenoid 32 is formed by embedding an annular solenoid 32a in a case 32b formed generally like a bottomed cylinder, and is placed in a space formed between the cylinder portion 13 of the solenoid case 10 and the cylinder portion 15 of the piston supporting shaft 11. The case 32b has its upper thick portion made of magnetic material and other portions made of non-magnetic material, and is interposed and held between the solenoid case 10 and the piston supporting shaft 11 by screwing the shaft 11 over the case 10. A cylindrical plunger 33 is inserted in the hollow portion of the solenoid 32. The solenoid 32 used in this embodiment, when energized, moves the plunger 33 upward. When the solenoid 32 isdeenergized, the plunger 33 is pushed downward by the spring force of a return spring (to be described later) and is returned to its initial position. The numeral 32c denotes a lead wire for the coil 32a and this lead wire 32c is led out of the cylinder through the axis portion of the piston rod 3.

The plunger has pins 33a and 33b axially projecting from both ends thereof, and is supported by these pins for axial movement relative to the solenoid 32. Describing in further detail, the pin 33a positioned upside in Fig.2 is slidably supported in the bottom portion of the bottomed cylindrical case 32b, and the pin 33b positioned underside in Fig.2 is slidably supported in a plug member 35 which limits the downward movement of the plunger 33 while closing the center opening of the solenoid 32. The plug member 35 is made of magnetic material so that a magnetic path may be formed with this plug member 35 and the thick portion of the case 32b to intensify the magnetic force.

The plug member 35 has an O-ring mounted on the outer periphery thereof to keep the solenoid interior airtight, and is installed in the solenoid 32 for axial sliding. That is, the plunger 33 slides upward or downward between the bottom portion of the case 32b and the plug member 35, and its reciprocation stroke S is determined by the position of the plug member 35.

Further, an adjusting spring 36 or a compression spring is elastically interposed between the plug member 35 and the plunger 33 to urge the plunger 33 upward in Fig.2.

The valve body 34 is formed by forming an oil passage forming groove 37 on the periphery of a round rod, and is inserted slidably along the cylinder axis direction in the through hole 17 of the piston supporting shaft 11 . The valve body 34 is urged downward from above by a return spring 38 so that its lower end may be kept in press contact with the pin 33a of the plunger 33. The return spring 38 is a compression coil spring, and is elastically interposed between a plug 39 screwed in the upper end portion of the piston supporting saft 11 and the upper end portion of the valve body 34. The spring force of the return spring 38 is required to be larger than that of adjusting spring 36 for urging the plunger 33 downward.

Therefore, when the solenoid 32 is deenergized, as shown in Fig.2 on the right side of the center line C, the valve body 34 is pushed downward by the return spring 38 and is so positioned that the plunger 33 is pressed against the plug member 35. On the other hand, when the solenoid 32 is energized, the valve body 34 is moved upward by a resultant of a thrust force applied on the plunger 33 by the solenoid 32 and a spring force applied on the plunger 33 by the adjusting spring 36 against the spring force of the return spring 38. Then, in the maximum energization state wherein the solenoid 32 energizing current reaches its maximum, as shown in Fig.2 on the left side of the center line C, the valve body 34 is so positioned that the plunger 33 may be pressed against the case 32b. The reciprocation stroke of the valve body 34 becomes equal to the stroke S of the plunger 33.

The groove 37 on the periphery of the valve body 34 is so formed that its opening width (vertical dimension) may be larger than the distance between the oil passage 23 or 24 and the annular groove 16a. On the other hand, the groove 37 is so positioned that the oil passages 23 and 24 and the annular groove 16a communicates with each other through the groove 37 when the solenoid 32 is deenergized and that the annular groove 16 is closed by the valve body outer portion lower than the groove 37 in the maximum energization state. Therefore, the passage sectional area of the oil passage in the through hole 17 is changed according to the vertical position of the valve body 34.

That is, in the deenergized state, the passage sectional area of the oil passage in the through hole 17 becomes maximum and the upper oil chamber 5a and the lower oil chamber 5b communicate with each other through this passage. In this state, since the oil flows between the upper oil chamber 5a and the lower oil chamber 5b through the oil passage above, the damping force becomes smaller. On the other hand, when the solenoid is energized, the valve body 34 gradually rises as the energizing current increases, the sectional area of the oil passage is gradually reduced accordingly and, therefore, the damping force gradually becomes greater.

When energization reaches its maximum, since the oil passage above is closed by the valve body 34, and all of oil flowing through the piston 7 receives the resistance of the throttle plates 19, the damping force becomes maximum.

A communicating hole 40 bored through the valve body 34 prevents the resistance against the movement of the valve body 34 from becoming greater because the valve body 34 itself functions substantially as a piston when moving along. The return spring containing space positioned above the valve body 34 and the plunger containing space positioned under the valve body 34 communicate with each other through this passage 40.

The solenoid driven control valve 31 constructed as described above is adjusted with respect to the relation between the length of movement of the valve body 34 and the magnitude of the energizing current by damping force adjusting means to be described below. In other words, the solenoid driven control valve 31 is so adjusted that the damping force may become a predetermined value without changing the magnitude of the current for energizing the solenoid 32. The damping force adjusting means 41 will be hereinafter described.

The damping force adjusting means 41 is so constructed as to change the spring force of the adjusting spring 36 elastically interposed between the plunger 33 and the plug member 35, that is, as to change the plunger driving force constituted of a resultant of the thrust force of the solenoid 32 and the spring force of the adjusting spring 36 by changing the position of the plug member 35 with the push rod 42 and thus increasing or decreasing the spring force of the adjusting spring 36.

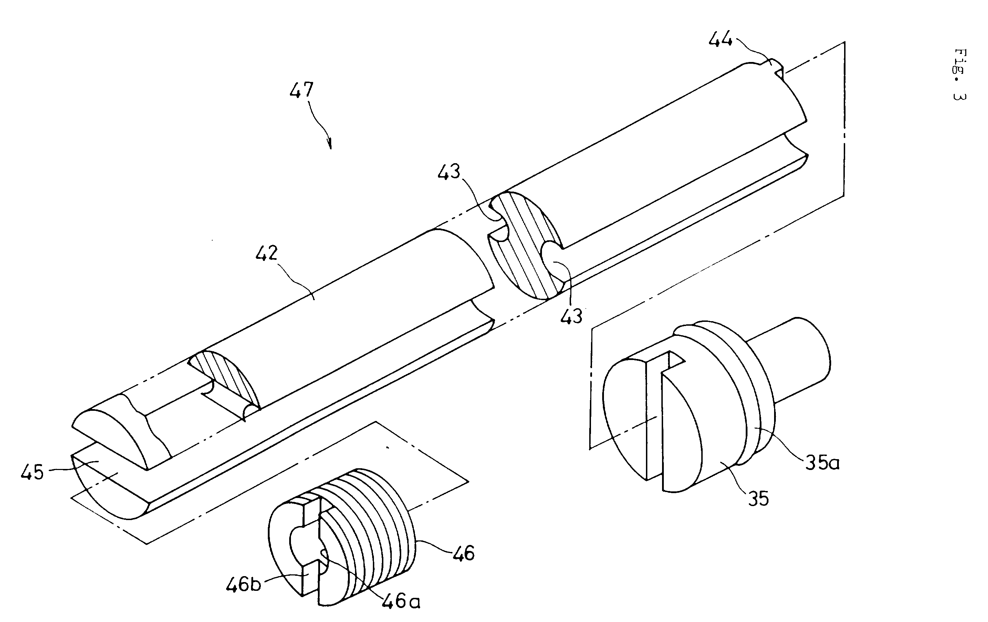

The push rod 42 is made of a round aluminium alloy rod and, as shown in Fig.3, has two grooves 43 disposed opposite to each other and extending axially on the outer surface thereof, a projection 44 formed on one end thereof to be fitted in the plug member 35 and a cutout 45 formed on the other end thereof in continuation from the grooves 43. The push rod 42 is slidably fitted in the through hole 14 of the solenoid case 10 and in the hollow of the hollow shaft 9 in a state with the projection 44 on one end thereof fitted in the plug member 35 and with the other end thereof prevented from coming out by an adjusting bolt 46. The adjusting bolt 46 is a bolt to be in screw engagement with the hollow shaft 9, and has a through hole 46a bored through the axis portion thereof and and a tool engaging groove 46b formed on the end surface thereof exposed out of the piston rod 3 to be engaged with a tool for turning this adjusting bolt 46.

The lead wires 32c for the solenoid 32 is led out of the piston rod 3 through the grooves 43 of the push rod 42 and the through hole 46a of the adjusting bolt 46, and are connected to an electric current controller (not shown).

By screwing the adjusting bolt 46 into or out of the hollow shaft 9 with the push rod 42 interposed between the plug member 35 and the adjusting bolt 46 as shown in Fig.2, the push rod 42 and the plug member 35 is moved upward or downward as shown in Fig.2. Although the push rod 42 in contact with the adjusting bolt 46 may turn together when the adjusting bolt 46 is turned, the push rod 42 is restrained from turning by the friction between the O-ring 35a of the plug member 35 and the solenoid 32.

When the plug member 35 is moved upward in Fig.2, the spring force of the adjusting spring 36 increases, and the resistance against the movements of of the plunger 33 and the valve body 34 caused by the solenoid 32 becomes smaller accordingly. In a state with the adjusting bolt 46 screwed in as described above, if the magnitude of the current flowing through the solenoid 32 remains unchanged compared with that before the screw-in, since the valve body 34 is moved upward (toward the fully closing state) by a stroke corresponding to the screw-in stroke, the damping force is increased accordingly. In contrast to this, the damping force can be reduced by screwing out the adjusting bolt 46.

Therefore, this damping force adjusting means 41 is composed of an adjusting rod 47 comprising a push rod 42, plug member 35 on one end thereof, adjusting bolt 46 on the other end thereof, and an adjusting spring 36 elastically interposed between the adjusting rod 47 and the plunger 33, and the load on the movements of the plunger 33 is increased or decreased by moving the adjusting rod 47 relative to the piston rod 3.

Therefore, on the hydraulic shock absorber according to this invention, the relation between the magnitude of the energizing current and the damping force is changed by turning the adjusting bolt 46 even after the throttled piston 7 and solenoid driven control valve 31 are assembled in the cylinder 2.

Although the push rod 42 constituting part of the adjusting rod 47 is formed of aluminium alloy in this embodiment, metal having a larger thermal expansion coefficient such as magnesium alloy can be used as the material for the push rod 42. When the push rod 42 is formed of material having a larger thermal expansion coefficient, even if the hydraulic oil generates heat as a result of heavy use and its temperature rises to lower its viscosity , the push rod is expanded by heat, and is corrected so that the damping force increases.

Although the adjusting rod 47 is composed of a push rod 42, plug member 35 and an adjusting bolt 46 in the embodiment above, it is also possible to form the adjusting rod 47 of a single round rod and screw this rod-made adjusting rod into the piston rod 3. When such a structure is employed, the lead wires 32c for the solenoid 32 is led out through a through hole bored through the axis portion of this rod-made adjusting rod.

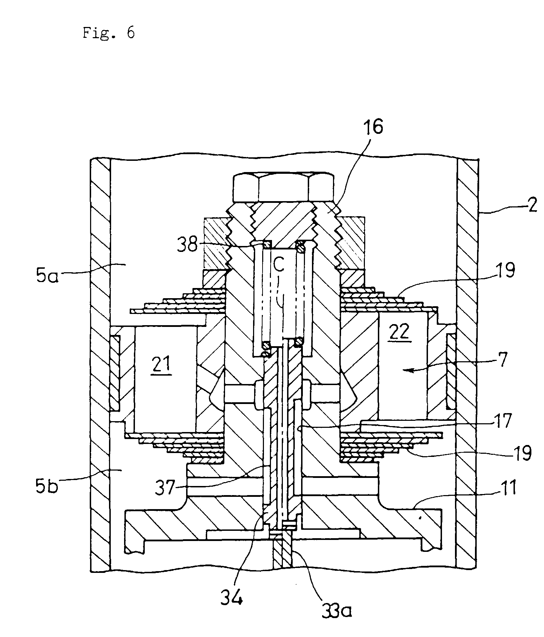

Further, although the oil passage is fully opened in the state with the solenoid 32 deenergized in this embodiment, the shock absorber according to this invention may also be constructed so that the oil passage is fully closed in the state with the solenoid 32 deenergized as shown in Fig.6.

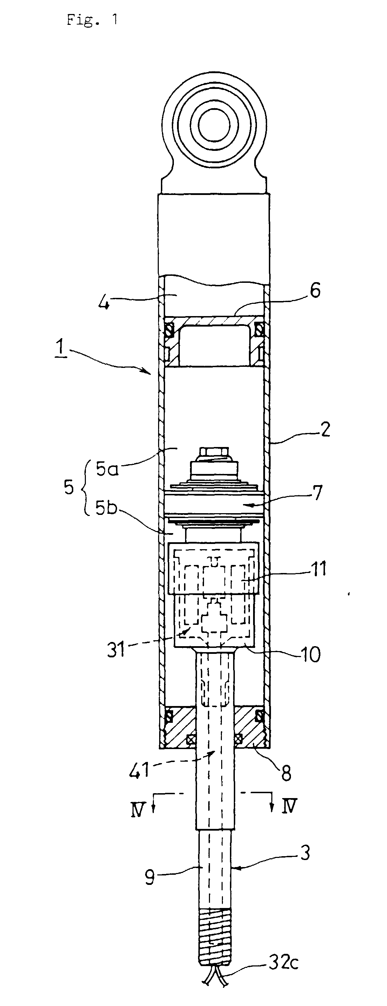

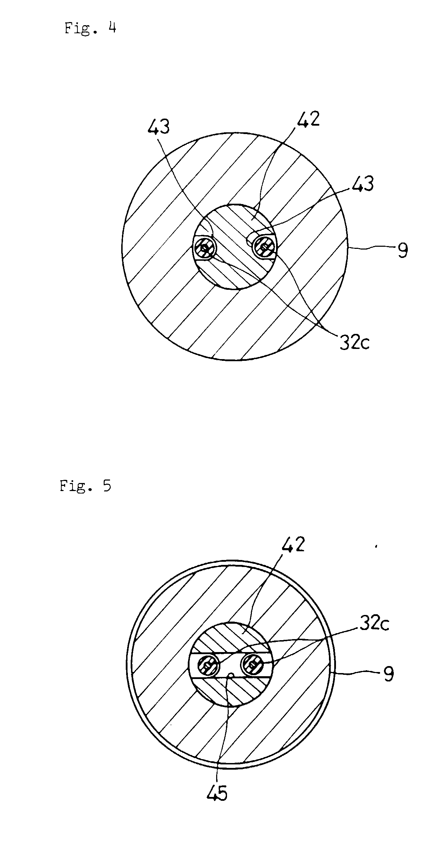

Fig.6 is a sectional view showing another example of the valve body. In Fig.6, components which are identical or similar to those described referring to Figs.1 through 5 are provided with the same symbols, and detailed description thereof is omitted. The valve body 34 shown in Fig.6 is so positioned that it fully closes the oil passage in the through hole 17 as shown on the left side of the center line C when the solenoid 32 is deenergized, while it may gradually enlarge the sectional area of the oil passage as the energizing current increases. When the energizing current reaches its maximum, the oil passage is fully opened as shown on the right side of the center line C.

In addition, although the thrust force of the solenoid 32 is directed upward toward the piston 7 in the embodiments described above, the thrust force may be directed contrariwise downward. In case of such downward thrust force, the adjusting spring 36 is made stronger than the return spring 38 to position the plunger 38 at its uppermost position. Further, in such a case, the return spring can be omitted by forming the plunger 33 and the valve body 34 integrally.

Since the variable damping force shock absorber as described above has a solenoid driven control valve so constructed that the length of plunger displacement is changed according to the magnitude of solenoid energizing current, and its piston rod is provided with damping force adjusting means comprising an adjusting rod extending from the end portion of the piston rod positioned outside the cylinder to the plunger mounting portion so as to be movable in the cylinder axis direction, and a coil spring elastically mounted between the adjusting rod and the plunger, the damping force is increased or decreased according to the magnitude of the current for energizing the solenoid driven control valve, and the load to move the plunger of the solenoid driven control valve is increased or decreased by moving the adjusting rod relative to the piston rod.

Therefore, the degree of freedom for setting the damping force can be made greater, while the damping force can be adjusted finely even after assembling was completed.

## Claims

1. Hydraulic shock absorber with a variable damping force, comprising a cylinder (2) containing a damping fluid, a piston assembly (3) including a throttled piston (7) partitioning said cylinder (2) into a first and a second cylinder chamber (5a,5b) communicating with each other via a communicating passage (17,18,21,23,24,25,26) formed in the throttled piston (7) and a valve means (31) for varying the flow resistance of said communicating passage (17,18,21,23,24,25,26), said piston assembly (3) being provided with an adjusting device (41) comprising a push rod (42) being axially movable received in a piston rod (3), for pre-adjusting the flow resistance of said throttled piston (7), said push rod (42) being adapted for pushing a valve body (34) which is axially slidably received in the piston (7) against the force of a spring (36) and which forms part of said valve means (31) which valve means (31) further comprises a proportional solenoid unit (32) for driving said valve body (34) for adjusting the axial position of said valve body (34) which axial position varies the effective cross-sectional area of the communication passage (17,18,21,23-26),
**characterized in that**
said adjusting device (41) comprising an adjusting member (46) for pre-adjusting the axial position of said push rod (42), said adjusting member (46) being operable from outside the cylinder (2).

2. Hydraulic shock absorber as claimed in claim 1, **characterized in that** the communicating passage comprises a first fluid passage (21,22) provided with throttle means (19) for throttling the fluid flow through said first fluid passage (21,22) and a second fluid passage (17,18,23,24,25,26) for communicating said first and second cylinder chamber in parallel with said first fluid passage (21,22), wherein the valve means (31) is associated with said second fluid passage (17,18,23,24,25,26) for varying the effective cross-sectional area of said second fluid passage (17,18,23,24,25,26).

3. Hydraulic shock absorber as claimed in claim 1 or 2, **characterized in that** said proportional solenoid unit (32) having a plunger (33) for driving said valve body (34) slidably received in said second fluid passage (17) infinitely variably between a first position, wherein the second fluid passage (17,18) is fully opened and a second position wherein the second fluid passage (17,18) is closed.

4. Hydraulic shock absorber as claimed in at least one of claims 1 to 3, **characterized in that** a second fluid passage comprises a central through hole (17) formed in the throttled piston (7) for receiving the valve body (34), said central through hole (17) being communicated with the first cylinder chamber (5a) via the first fluid passage (21) and with the second cylinder chamber (5b) via a radial passage (25,26) formed in the piston rod (3).

5. Hydraulic shock absorber as claimed in claim 3 or 4, **characterized in that** the solenoid unit (32) for slidably receiving the plunger (33) comprises a solenoid case (32b) received in a solenoid receiving portion (10) of the piston rod (3) wherein a plug member (35) is provided in said solenoid case (32b) for limiting the stroke of the plunger (33).

6. Hydraulic shock absorber as claimed in claim 5, **characterized in that** said return spring means (36) is adapted for biasing the valve body (34) and the plunger (33), respectively, towards said plug member (35).

7. Hydraulic shock absorber as claimed in at least one of claims 2 to 6, **characterized in that** the adjusting device (41) comprises an adjusting assembly (41,36,42) for adjusting the effective cross-sectional area of the second fluid passage (17,18,23,24,25,26).

8. Hydraulic shock absorber as claimed in claim 7, **characterized in that** the adjusting assembly comprises said push rod (42) received in the piston rod (3) for adjusting the axial position of the plug member (35) and said adjusting spring means (36) for biasing the plunger (33) away from said plug member (35).

9. Hydraulic shock absorber as claimed in at least one of the claims 1 to 8, **characterized in that** the adjusting member is formed by a screw (46) engaged with a thread provided on an inner surface of the piston rod (3).

10. Hydraulic shock absorber as claimed in claim 8 or 9, **characterized in that** the push rod (42) is made of a material having a large thermal expansion.

## Patentansprüche

1. Hydraulik-Stoßdämpfer mit einer variablen Dämpfungsstärke, mit einem ein Dämpfungsfluid enthaltenden Zylinder (2), einer Kolbenanordnung (3), die einen den Zylinder (2) in eine erste und eine zweite Zylinderkammer (5a,5b) unterteilenden, mit einer Drossel versehenen Kolben (7) enthält, welche Zylinderkammern (5a,5b) über einen in dem mit einer Drossel versehenen Zylinder (7) ausgebildeten Verbindungskanal (17,18,21,23,24,25,26) miteinander in Verbindung stehen, und einem Ventilmittel (31) zum Verändern des Strömungswiderstandes in dem Verbindungskanal (17,18,21,23,24,25,26), wobei die Kolbenanordnung (3) mit einem einen in einer Kolbenstange (3) axial bewegbar aufgenommenen Stoßstab (42) umfassenden Einstellgerät (41) versehen ist, um den Strömungswiderstand des mit einer Drossel versehenen Kolbens (7) vor-einzustellen, welcher Stoßstab (42) ausgelegt ist, einen in dem Kolben (7) axial gleitbar aufgenommenen und einen Teil des Ventilmittels (31) bildenden Ventilkörper (34) gegen die Kraft einer Feder (36) zu stoßen, welches Ventilmittel (31) weiter eine Proportional-Elektromagneteinheit (32) zum Antreiben des Ventilkörpers (34) zum Einstellen der Axialposition des Ventilkörpers (34) umfaßt, welche Axialposition die wirksame Querschnittsfläche des Verbindungskanals (17,18, 21, 23-26) verändert,
**dadurch gekennzeichnet, daß**
das Einstellgerät (41) ein Einstellteil (46) zum Vor-Einstellen der Axialposition des Stoßstabes (42) umfaßt, und das Einstellteil (46) von außerhalb des Zylinders (2) betätigbar ist.

2. Hydraulik-Stoßdämpfer nach Anspruch 1, **dadurch gekennzeichnet, daß** der Verbindungskanal einen ersten mit Drosselmitteln (19) zum Drosseln der Fluidströmung durch den ersten Fluidkanal (21) versehenen Fluidkanal (21,22) und einen zweiten Fluidkanal (17,18,23,24, 25,26) zum Verbinden der ersten und der zweiten Zylinderkammer parallel zu dem ersten Fluidkanal (21,22) umfaßt, wobei das Ventilmittel (31) dem zweiten Fluidkanal (17,18,23,24, 25,26) zum Verändern der wirksamen Querschnittsfläche des zweiten Fluidkanals (17,18,23, 24,25,26) zugeordnet ist.

3. Hydraulik-Stoßdämpfer nach Anspruch 1 oder 2, **dadurch gekennzeichnet, daß** die Proportional-Elektromagneteinheit (32) einen Stößel (33) zum Ansteuern des Ventilkörpers (34) aufweist, der in dem zweiten Fluidkanal (17) stufenlos veränderbar zwischen einer ersten Position, bei der der zweite Fluidkanal (17,18) voll geöffnet ist, und einer zweiten Position, bei der der zweite Fluidkanal (17,18) geschlossen ist, gleitend aufgenommen ist.

4. Hydraulik-Stoßdämpfer nach mindestens einem der Ansprüche 1 bis 3, **dadurch gekennzeichnet, daß** ein zweiter Fluidkanal eine zentrale in dem mit einer Drossel versehenen Kolben (7) ausgebildete Durchgangsbohrung (17) zum Aufnehmen des Ventilkörpers (37) umfaßt, welche zentrale Durchgangsbohrung (17) über den ersten Fluidkanal (21) mit der ersten Zylinderkammer (5a) und über einen in der Kolbenstange (3) gebildeten Radialkanal (25,26) mit der zweiten Zylinderkammer (5b) in Verbindung steht.

5. Hydraulik-Stoßdämpfer nach Anspruch 3 oder 4, **dadurch gekennzeichnet, daß** die Elektromagneteinheit (32) zum gleitbaren Aufnehmen des Stößels (33) ein in einem Elektromagnet-Aufnahmeabschnitt (10) der Kolbenstange (3) aufgenommenes Elektromagnetgehäuse (32b) umfaßt, wobei ein Stopfenteil (35) in dem Elektromagnetgehäuse (32b) zur Begrenzung des Hubs des Stößels (33) vorgesehen ist.

6. Hydraulik-Stoßdämpfer nach Anspruch 5, **dadurch gekennzeichnet, daß** das Rückholfedermittel (36) ausgelegt ist, den Ventilkörper (34) bzw. den Stößel (33) zu dem Stopfenteil (35) hin vorzuspannen.

7. Hydraulik-Stoßdämpfer nach mindestens einem der Ansprüche 2 bis 6, **dadurch gekennzeichnet, daß** das Einstellgerät (41) eine Einstellanordnung (41,36,42) zum Einstellen der wirksamen Querschnittsfläche des zweiten Fluidkanals (17,18,23,24,25,26) umfaßt.

8. Hydraulik-Stoßdämpfer nach Anspruch 7, **dadurch gekennzeichnet, daß** die Einstellanordnung die in der Kolbenstange (3) aufgenommene Stoßstange (42) zum Einstellen der Axialposition des Stopfenteils (35) und das Einstellfedermittel (36) zum Vorspannen des Stößels (33) von dem Stopfenteil (35) weg umfaßt.

9. Hydraulik-Stoßdämpfer nach mindestens einem der Ansprüche 1 bis 8, **dadurch gekennzeichnet, daß** das Einstellteil durch eine Schraube (46) in Eingriff mit einem an einer Innenfläche der Kolbenstange (3) vorgesehenen Gewinde gebildet ist.

10. Hydraulik-Stoßdämpfer nach Anspruch 8 oder 9, **dadurch gekennzeichnet, daß** die Stoßstange (42) aus einem Material mit einer großen thermischen Dehnung gefertigt ist.

## Revendications

1. Amortisseur hydraulique à force d'amortissement variable, comprenant un cylindre (2) contenant un fluide d'amortissement, un ensemble de piston (3) comprenant un piston de régulation par étranglement (7) séparant ledit cylindre (2) en une première et une seconde chambre de cylindre (5a, 5b) en communication l'une avec l'autre par l'intermédiaire d'un passage de communication (17, 18, 21, 23, 24, 25, 26) formé dans le piston de régulation par étranglement (7) et des moyens de clapet (31) destinés à modifier la résistance au débit dudit passage de communication (17, 18, 21, 23, 24, 25, 26), ledit ensemble de piston (3) comportant un dispositif de réglage (41) comprenant une tige de poussée (42) reçue en déplacement axial dans la tige de piston (3), afin de pré-régler la résistance au débit dudit piston de régulation par étranglement (7), ladite tige de poussée (42) étant adaptée pour pousser un corps de clapet (34) qui est reçu en coulissement axial dans le piston (7) contre la force d'un ressort (36) et qui fait partie desdits moyens de clapet (31), lesquels moyens de clapet (31) comprennent en outre un ensemble électroaimant à piston plongeur proportionnel (32) destiné à commander ledit corps de clapet (34) afin de régler la position axiale dudit corps de clapet (34), laquelle position axiale modifie la surface en coupe transversale efficace du passage de communication (17, 18, 21, 23 - 26),
caractérisé en ce que
ledit dispositif de réglage (41) comprend un élément de réglage (46) destiné à pré-régler la position axiale de ladite tige de poussée (42), ledit élément de réglage (46) pouvant être actionné à partir de l'extérieur du cylindre (2).

2. Amortisseur hydraulique selon la revendication 1, caractérisé en ce que le passage de communication comprend un premier passage de fluide (21, 22) comportant des moyens de régulation (19) destinés à réguler le débit de fluide passant par ledit premier passage de fluide (21, 22) et un second passage de fluide (17, 18, 23, 24, 25, 26) destiné à faire communiquer lesdites première et seconde chambre de cylindre en parallèle avec ledit premier passage de fluide (21, 22), dans lequel les moyens de clapet (31) sont associés avec ledit second passage de fluide (17, 18, 23, 24, 25, 26) afin de modifier la surface en coupe transversale efficace dudit second passage de fluide (17, 18, 23, 24, 25, 26).

3. Amortisseur hydraulique selon la revendication 1 ou la revendication 2, caractérisé en ce ledit ensemble électroaimant à piston plongeur proportionnel (32) comportant un piston plongeur (33) destiné à entraîner ledit corps de clapet (34) est reçu en coulissement dans ledit second passage de fluide (17) de manière variable à l'infini entre une première position, dans laquelle le second passage de fluide (17, 18) est complètement ouvert et une seconde position dans laquelle le second passage de fluide (17, 18) est fermé.

4. Amortisseur hydraulique selon au moins l'une des revendications 1 à 3, caractérisé en ce qu'un second passage de fluide comprend un trou traversant central (17) formé dans le piston de régulation par étranglement (7) afin de recevoir le corps de clapet (34) , ledit trou traversant central (17) étant en communication avec la première chambre de cylindre (5a) par l'intermédiaire du premier passage de fluide (21) et avec la seconde chambre de cylindre (5b) par l'intermédiaire d'un passage radial (25, 26) formé dans la tige de piston (3).

5. Amortisseur hydraulique selon la revendication 3 ou la revendication 4, caractérisé en ce que l'ensemble électroaimant à piston plongeur proportionnel (32) destiné à recevoir en coulissement le piston plongeur (33) comprend un carter de solénoïde (32b) reçu dans une partie de réception de solénoïde (10) de la tige de piston (3) dans lequel un élément de bouchon (35) est fourni dans ledit carter de solénoïde (32b) afin de limiter la course du piston plongeur (33).

6. Amortisseur selon la revendication 5, caractérisé en ce que lesdits moyens de ressort de rappel (36) sont adaptés pour décentrer respectivement le corps de clapet (34) et le piston plongeur (33) vers ledit élément de bouchon (35).

7. Amortisseur hydraulique selon au moins l'une des revendications 2 à 6, caractérisé en ce que le dispositif de réglage (41) comprend un ensemble de réglage (41, 36, 42) destiné à régler la surface en coupe transversale efficace du second passage de fluide (17, 18, 23, 24, 25, 26).

8. Amortisseur hydraulique selon la revendication 7, caractérisé en ce que l'ensemble de réglage comprend ladite tige de poussée (42) reçue dans la tige de piston (3) afin de régler la position axiale de l'élément de bouchon (35) et lesdits moyens de ressort de réglage (36) destinés à décentrer le piston plongeur (33) à partir dudit élément de bouchon (35).

9. Amortisseur hydraulique selon au moins l'une des revendications 1 à 8, caractérisé en ce que l'élément de réglage est formé par une vis (46) engagée dans un filetage aménagé sur une surface intérieure de la tige de piston (3).

10. Amortisseur hydraulique selon la revendication 8 ou la revendication 9, caractérisé en ce que la tige de poussée (42) est fabriquée dans un matériau à grande dilatation thermique.
